# EUROPÄISCHE PATENTSCHRIFT

(11) **EP 1 429 954 B1**
(45) Veröffentlichungstag und Bekanntmachung des Hinweises auf die Patenterteilung: **24.05.2006**
(21) Anmeldenummer: 02779127.6
(22) Anmeldetag: 25.09.2002
(51) Int. Cl.: B62D 5/32, B62D 5/097

(54) **HYDRAULISCHE LENKEINRICHTUNG MIT BERSETZUNGS NDERUNG**
HYDRAULIC STEERING DEVICE WITH MODIFIED TRANSMISSION
MECANISME DE DIRECTION HYDRAULIQUE AVEC MODIFICATION DE TRANSMISSION

(30) Priorität: 26.09.2001 DE 10147569
(43) Veröffentlichungstag der Anmeldung: 23.06.2004
(73) Patentinhaber: Bosch Rexroth AG, 97816 Lohr (DE)
(72) Erfinder: BERGMANN, Erhard, 19079 Mirow (DE); SCHILDMANN, Manfred, 19372 Karrenzin (DE); VOSS, Gerhard, 19370 Parchim (DE)
(74) Vertreter: Jaap, Reinhard
(86) Internationale Anmeldenummer: PCT/DE2002/003641
(87) Internationale Veröffentlichungsnummer: WO 2003/026946

(56) Entgegenhaltungen:
- EP-B- 0 746 492
- GB-A- 1 524 707
- US-A- 5 186 211
- US-A- 5 970 708

## Beschreibung

Die Erfindung bezieht sich auf eine hydraulische Lenkeinrichtung nach dem Oberbegriff des Anspruchs 1.
Derartige Lenkeinrichtungen werden in mobilen hydraulischen Anlagen, insbesondere in langsam fahrenden Fahrzeugen eingesetzt.

Lenkeinrichtungen dieser Art sind seit längerem in den verschiedensten Ausführungen bekannt.
Diese Lenkeinrichtung besteht aus einem Gehäuse mit einem Zulaufanschluss für eine Versorgungspumpe, einem Ablaufanschluss für einen Tank und zwei richtungswechselnde Anschlüsse für den Zulauf zu einem Lenkzylinder und den Rücklauf von dem Lenkzylinder. Im Gehäuse ist in der Hauptsache ein Drehschiebersteuerventil und eine nach dem Orbitprinzip arbeitende Dosierpumpe untergebracht, wobei die Dosierpumpe aus einem feststehenden Außenring mit beispielsweise sieben Innenzähnen und einem drehenden Läuferzahnrad mit dann sechs Außenzähnen besteht. Das Drehschiebersteuerventil wird aus einer äußeren, im Gehäuse eingepassten Steuerhülse und einem inneren, konzentrisch zur Steuerhülse angeordneten Steuerkolben gebildet, die beide gegen die Kraft einer Feder relativ zueinander drehbar sind. Dabei ist der Steuerkolben einerseits mechanisch mit einem Lenkrad und die Steuerhülse andererseits mechanisch mit dem Läuferzahnrad der Dosierpumpe verbunden. Zwischen dem Drehschiebersteuerventil und der Dosierpumpe besteht über Kommutatorkanäle eine hydraulische Verbindung. Diese Lenkeinrichtung arbeitet mit der Unterstützung der Versorgungspumpe im Servobetrieb und bei Ausfall der Versorgungspumpe im Notbetrieb, bei dem der erforderliche Druck in der Lenkeinrichtung allein durch die Handkraft am Lenkrad erzeugt wird.
Hierbei ist aber nachteilig, dass das Umschalten von Servobetrieb auf den Notbetrieb ohne vorherige Ankündigung für den Fahrer erfolgt und die Handkraft sich dabei auf ein Vielfaches erhöht. Diese Situation ist vom Fahrer nur schwer zu bewältigen, sodass sich damit ein erhöhtes Risiko im Straßenverkehr einstellt.
Es gibt daher Lenkeinrichtungen dieser Art, die in einem solchen Fall mit einer Übersetzungsveränderung arbeiten.

Eine solche hydraulische Lenkeinrichtung ist mit der gattungsgemäßen EP 0 746 492 B1 des Anmelders bekannt geworden, bei der die Dosierpumpe über drei parallele Zulaufleitungen, die konstruktiv in einer ersten radialen Ebene angeordnet sind, direkt mit dem Lenkzylinder verbunden sind. Die restlichen drei parallelen Zulaufleitungen zwischen der Dosierpumpe und dem Lenkzylinder sind konstruktiv in einer zweiten radialen Ebene angeordnet und besitzen jeweils ein in Richtung zum Lenkzylinder öffnendes Rückschlagventil. In einer bevorzugten Ausführungsform dieser bekannten Lenkeinrichtung ist an Stelle der drei einzelnen Rückschlagventile ein gemeinsames, für alle drei Zulaufleitungen der zweiten radialen Ebene wirksames Rückschlagventil vorgesehen, das in besonderer Weise mit einer Umschalteinheit verbunden ist. Diese Umschalteinheit wird vom Druck vor den Eingangsdrosseln der Lenkeinrichtung gesteuert. Dadurch nimmt die Umschalteinheit im Servobetrieb, wenn also vor den Eingangsdrosseln ein Druck herrscht, eine erste Stellung ein, in der alle sechs Zulaufleitungen beider radialen Ebenen an der Versorgung des Lenkzylinders beteiligt sind und sie nimmt im Notlenkbetrieb, wenn also kein Druck vor den Eingangsdrosseln anliegt, eine zweite Stellung ein, in der die drei Zulaufleitungen der zweiten radialen Ebene mit der zur Dosierpumpe führenden und Unterdruck aufweisenden Zulaufleitung oder mit der zum Tank führenden Rücklaufleitung verbunden sind. Damit sind nur die drei in der ersten radialen Ebene befindlichen Zulaufleitungen an der Versorgung des Lenkzylinders beteiligt.

Die Rücklaufleitungen zwischen dem Lenkzylinder und der Dosierpumpe sind wie die Zulaufleitungen konstruktiv in zwei radialen Ebenen angeordnet, wobei die Rücklaufleitungen der zweiten radialen Ebene wieder durch ein gemeinsames und umschaltbares Rückschlagventil abgetrennt sind und der gesamte Rücklaufölstrom über die verbleibenden Rücklaufleitungen der ersten Ebene geführt wird.
Durch das verringerte Verdrängungsvolumen wird zwangsläufig die Anzahl der notwendigen Drehungen am Lenkrad zum Erreichen eines bestimmten Einschlages der gelenkten Räder höher, aber die erforderliche Lenkkraft wird gegenüber einer herkömmlichen Lenkung annähernd halbiert und damit vom Fahrzeugführer beherrschbar.
Es hat sich aber gezeigt, dass durch die verminderten Rücklaufquerschnitte ein gegenüber dem Zulaufdruck an den Eingangsdrosseln höherer Ablaufdruck erzeugt wird, der der Lenkbewegung entgegenwirkt und den Wirkungsgrad der Lenkeinrichtung stark vermindert.

Der Erfindung liegt daher die Aufgabe zu Grunde, die Querschnitte in den Rücklaufleitungen einer gattungsgemäßen Lenkeinrichtung so zu verändern, dass sich die Durchflusswiderstände im Rücklauf den Durchflusswiderständen im Zulauf zum Lenkzylinder annähern.

Diese Aufgabe wird durch eine hydraulische Lenkeinrichtung gemäß Anspruch 1 gelöst. Weitere Ausgestaltungsmöglichkeiten ergeben sich aus den Unteransprüchen 2 bis 4. Die neue Lenkeinrichtung beseitigt die genannten Nachteile des Standes der Technik. So wird die Verringerung der Durchflusswiderstände im Rücklauf dadurch erreicht, dass die Querschnitte in den Rücklaufleitungen wesentlich erhöht und an den Querschnitten in den Zulaufleitungen angepasst werden. Das ist technisch einfach und kostengünstig zu realisieren. So entfallen zunächst die bisher sechs üblichen Ablaufschlitze im Steuerkolben, was Fertigungskosten einspart. Dafür werden an gleicher Stelle sechs Durchbrüche gesetzt, was fertigungstechnisch wiederum günstig ist. Dabei wird der Durchmesser und die Lage der neuen Durchbrüche im Steuerkolben so gewählt, dass sich in Verbindung mit den Durchbrüchen in der Steuerhülse eine Öffnungscharakteristik ergibt, die sich proportional zur Öffnungscharakteristik der Eingangsdrosseln verhält. Durch den Wegfall der bisherigen und sich axial erstreckenden Rücklaufschlitze wird in vorteilhafter Weise Platz für zusätzliche und parallele Rücklaufleitungen in Form von Durchbrüchen in der Steuerhülse und im Steuerkolben geschaffen. Damit können die Rücklaufquerschnitte annähernd verdoppelt werden.
Es ist dabei zweckmäßig, die genannten Durchbrüche als Rücklaufbohrungen auszuführen.

Die Erfindung soll anhand eines Ausführungsbeispieles näher erläutert werden.
Dazu zeigen:
- Fig. 1:: eine schematische Darstellung eines Lenkkreislaufes mit einer gattungsgemäßen Lenkeinrichtung mit einem zusätzlichen Lastsignalanschluss LS für ein Prioritätsventil,
- Fig. 2:: eine abgewickelte Ansicht der Drehschiebersteuereinheit der Lenkeinrichtung in der Neutralstellung und
- Fig. 3:: eine abgewickelte Ansicht der Drehschiebersteuereinheit in einer ausgelenkten Stellung.

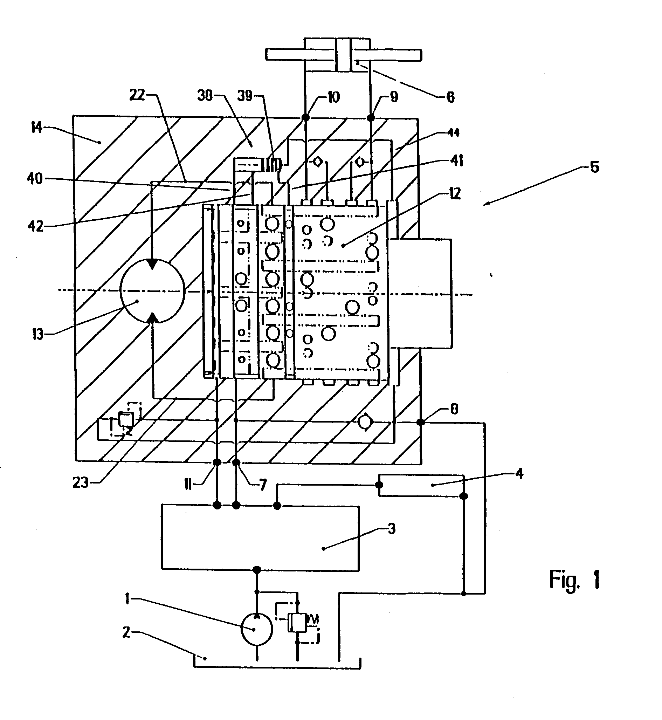

Gemäß der Fig. 1 besteht ein beispielhafter hydraulischer Lenkungskreislauf aus einer Versorgungspumpe 1 mit einem Tank 2, einem Prioritätsventil 3 zur Versorgung einer Arbeitshydraulik 4 mit überschüssigem Drucköl, der anmeldegegenständlichen hydraulischen Lenkeinrichtung 5 und einem Lenkzylinder 6.
Zur Einbindung in diesen Kreislauf besitzt die Lenkeinrichtung 5 einen Zulaufanschluss 7, der über das Prioritätsventil 3 mit der Versorgungspumpe 1 Verbindung hat, einen Ablaufanschluss 8, der mit dem Tank 2 verbunden ist, zwei Zylinderanschlüsse 9,10 für die bei Recht- und Linksdrehung wechselnde Verbindung mit dem Lenkzylinder 6 und einen Lastsignalanschluss 11 zur Steuerverbindung mit dem Prioritätsventil 3.

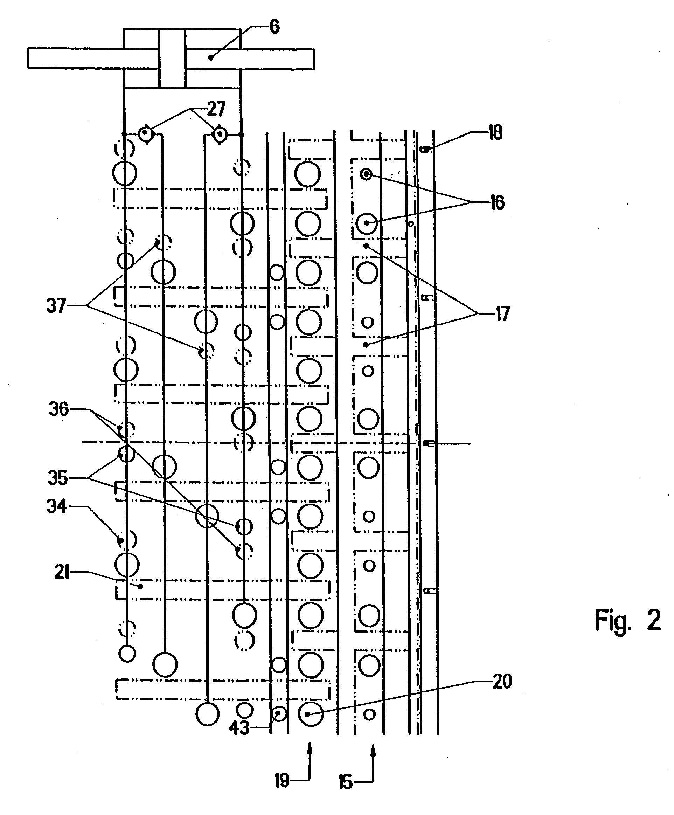

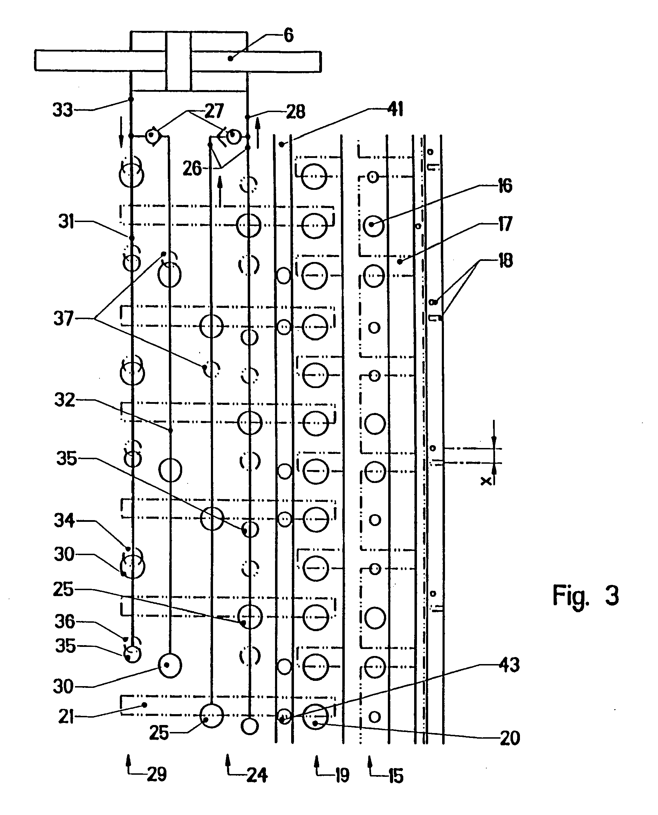

Die hydraulische Lenkeinrichtung 5 besteht im wesentlichen aus einem nach dem Drehsteuerprinzip arbeitenden Steuerventil 12 und einer nach dem Gerotorprinzip arbeitenden Dosierpumpe 13. Dabei besitzt die Dosierpumpe 13 einen äußeren Zahnring mit beispielsweise sieben Innenzähnen und ein innenliegendes und umlaufendes Läuferzahnrad mit dann sechs Außenzähnen, die zwischen sich sechs volumenveränderliche Kammern ausbilden.
Das Steuerventil 12 besteht aus einem inneren und mit Strich-Punkt-Linien kenntlich gemachten Steuerkolben, der mechanisch mit einem Lenkrad verbunden ist, und einer äußeren und sichtbar dargestellten Steuerhülse, die mechanisch mit dem Läuferzahnrad der Dosierpumpe 13 Verbindung hat. Dazu sind der Steuerkolben und die Steuerhülse zusammen in einem Gehäuse 14 eingepasst, gegen die Kraft einer Feder in einem begrenzten Winkel zueinander drehbar und mit gleichmäßig am Umfang verteilten axialen und radialen Kanälen ausgerüstet, die miteinander hydraulische Wirkungspaare ausbilden und mit den volumenveränderlichen Kammern der Dosierpumpe 13 kommunizieren.
So besitzt das Steuerventil 12, wie die Fig. 2 und 3 näher zeigen, eine Eingangsdrossel 15, die in einer radialen Ebene aus zwölf im Durchmesser gestaffelte Eingangsbohrungen 16 in der Steuerhülse und durch sechs axiale Eingangsschlitze 17 im Steuerkolben gebildet werden. Einerseits der Eingangsdrossel 15 führen die Eingangsschlitze 17 zu einem zum Prioritätsventil 3 führenden Lastsignalanschluss 11, der in der Neutralstellung des Steuerventils 12 durch geöffhete Lastsignaldrosseln 18 entlastet ist. Andererseits der Eingangsdrossel 15 befindet sich eine Kommutatordrossel 19, die aus zwölf in einer Ebene befindlichen Kommutatorbohrungen 20 in der Steuerhülse und aus den sechs axialen Eingangsschlitzen 17 im Steuerkolben einerseits und aus sechs axialen Zulaufschlitzen 21 im Steuerkolben andererseits gebildet wird. Dabei sind sechs der Kommutatorbohrungen 20 und die axialen Eingangsschlitze 17 über eine Zulaufleitung 22 mit der Dosierpumpe 13 und die anderen sechs Kommutatorbohrungen 20 und die axialen Zulaufschlitze 21 über eine Rücklaufleitung 23 mit der Dosierpumpe 13 verbunden.
Im Steuerventil 12 befindet sich weiterhin eine Zylinderdrossel 24 für den Zulauf zum Lenkzylinder 6. Diese Zylinderdrossel 24 wird aus den sechs axialen Zulaufschlitzen 21 im Steuerkolben und aus sechs Zulaufbohrungen 25 in der Steuerhülse als Zulaufdrosseln gebildet, wobei in diesem Beispiel die Zulaufbohrungen 25 in zwei radialen Ebenen zu je drei Zulaufbohrungen 25 angeordnet sind. Die drei Zulaufbohrungen 25 einer radialen Ebene sind untereinander durch einen Ringkanal 26 miteinander kurz geschlossen und die beiden Ringkanäle 26 beider radialen Ebenen sind über ein in Richtung zum Lenkzylinder 6 öffnendes Rückschlagventil 27 miteinander und über eine Zulaufleitung 28 mit dem Lenkzylinder 6 verbunden.
Das Steuerventil 12 besitzt des weiteren eine Zylinderdrossel 29 für den Rücklauf vom Lenkzylinder 6. Diese Zylinderdrossel 29 besteht wiederum aus sechs Rücklaufbohrungen 30 als Rücklaufdrosseln, die jeweils auf zwei radialen Ebenen aufgeteilt sind. Diese Rücklaufbohrungen 30 wirken in der gegengerichteten Lenkbewegung alternativ als Zulaufbohrungen 25 zum Lenkzylinder 6. Die drei Rücklaufbohrungen 30 jeder radialen Ebene sind untereinander wieder durch einen Ringkanal 31 beziehungsweise einen Ringkanal 32 verbunden. Beide Ringkanäle 31, 32 münden in eine vom Lenkzylinder 6 kommende Rücklaufleitung 33 und sind untereinander durch das in der Rücklaufrichtung eine radiale Ebene sperrende Rückschlagventil 27 verbunden..
Jedem der drei Rücklaufbohrungen 30 in der Steuerhülse in der nicht gesperrten radialen Ebene ist eine Rücklaufbohrung 34 im Steuerkolben zugeordnet, die somit drei Wirkungspaare für die Rücklaufdrosselung ausbilden. Außerdem werden in derselben radialen Ebene drei zusätzliche Wirkungspaare für die Rücklaufdrosselung durch drei Rücklaufbohrungen 35 in der Steuerhülse und drei Rücklaufbohrungen 36 im Steuerkolben gebildet, sodass sich insgesamt sechs Wirkungspaare für die Rücklaufdrossel 29 ergeben, die in den Querschnitten und in der Drosselcharakteristik aller sechs Wirkungspaare von Rücklaufbohrungen 30, 34, 35, 36 auf die Querschnitte und die Drosselcharakteristik der Eingangsdrossel 15 zur Lenkeinrichtung 5 abgestimmt sind.

In der abgesperrten radialen Ebene der Zylinderdrossel 29 für den Rücklauf ist eine Druckentlastungsöffnung 37 im Steuerkolben vorgesehen, die mit einer der drei vom Rücklauf abgesperrten Rücklaufbohrung 30 in der Steuerhülse zusammenwirkt und die für eine Entlastung des Rückschlagventils 27 im Servobetrieb sorgt.

Wie die Fig. 1 zeigt, ist im Gehäuse 1 der Lenkeinrichtung 5 weiterhin eine Umschalteinrichtung 38 untergebracht, die in der Art eines entsperrbaren Rückschlagventils ausgebildet ist und die demnach einen verschiebbaren Ventilkörper 39 besitzt, der über eine Leitung 40 vom Druck vor der Dosierpumpe 13 und über eine Leitung 41 vom Druck hinter der Dosierpumpe 13 belastet wird und der in Abhängigkeit von diesen Druckverhältnissen zwischen den beiden Leitungen 40 und 41 die Leitung 41 hinter der Dosierpumpe 13 mit einer zum Eingang der Lenkeinrichtung 5 führenden Leitung 42 verbindet oder trennt. Dabei ist die Leitung 41 hinter der Dosierpumpe 13 über einen Ringkanal und im ausgelenkten Zustand über zumeist drei Kurzschlussbohrungen 43 in der Steuerhülse sowie über zumeist drei der axialen Zulaufschlitze 21 im Steuerkolben mit zumeist drei Zulaufbohrungen 25 der in Durchflussrichtung vor dem Rückschlagventil 27 liegenden radialen Ebene der Zylinderdrossel 24 für den Zulauf verbunden. Die Umschalteinrichtung 38 besitzt weiterhin eine zum Ablaufanschluss 8 führende Druckentlastungsleitung 44, die den Ventilkörper 39 im Servobetrieb entspannt.

In der Neutralstellung des Steuerventils 2 sind, so wie es die Fig. 1 und 2 zeigen, die Eingangsdrossel 15, die Kommutatordrossel 19, die Zylinderdrossel 24 für den Zulauf und die Zylinderdrossel 29 für den Rücklauf wegen fehlender Überdeckung der Bohrungen und Kanäle geschlossen und die Lastsignaldrossel 18 geöffnet.
Bei arbeitender Versorgungspumpe 1 und nicht betätigter Lenkeinrichtung 5 fließt vom Prioritätsventil 3 lediglich ein Steuerölstrom über den Lastsignalanschluss 11 und über die Lastsignaldrosseln 18 zum Ablaufanschluss 8 und zurück zum Tank 2.
Bei einer Auslenkung des Steuerventils 12 um einen bestimmten Betrag x in eine der beiden Richtungen, wie es in der Fig. 3 dargestellt ist, öffnen sich die bisher geschlossenen Eingangsdrosseln 15, die Kommutatordrosseln 19, die Zylinderdrosseln 24 für den Zulauf und die Zylinderdrosseln 29 für den Rücklauf, während die Lastsignaldrosseln 18 schließen, sodass ein Druckölstrom durch die Lenkeinrichtung 5 fließt. In Abhängigkeit der sich vor der Eingangsdrossel 15 einstellenden Druckverhältnisse wird über den Lastsignalanschluss 11 ein Lastdrucksignal auf das Prioritätsventil 3 übertragen, das nach dem Stromteilprinzip den von der Versorgungspumpe 1 bereitgestellten Ölstrom aufteilt in einen bedarfsgerechten Anteil für die Lenkeinrichtung 5 und einen überschüssigen Anteil für die Arbeitshydraulik 4.

Der bedarfsgerechte Lenkungsölstrom gelangt über die in Überdeckung befindlichen Eingangsbohrungen 16 der Steuerhülse in die sechs axialen Eingangsschlitze 17 des Steuerkolbens und von dort zu jeder zweiten der zwölf Kommutatorbohrungen 20 der Steuerhülse. Von hier fließt das Öl durch die Zulaufleitung 22 zur Dosierpumpe 13, wird dort gemessen und in dosierter Menge über die Rücklaufleitung *von der Dosierpumpe* 23 zum Steuerventil 12 zurückgeleitet. Das Öl gelangt dabei durch die anderen Kommutatorbohrungen 20 in der Steuerhülse in die axialen Zulaufschlitze 21 des Steuerkolbens und fließt parallel durch die Zulaufbohrungen 25 der Steuerhülse in der ersten radialen Ebene und den Zulaufbohrungen 25 der Steuerhülse in der zweiten radialen Ebene der Zylinderdrossel 24. Beide parallelen Ölströme vereinen sich hinter dem sich öffnenden Rückschlagventil 27 und strömen durch die Zulaufleitung 28 in den Lenkzylinder 6. Das dabei gleichzeitig aus dem Lenkzylinder 6 verdrängte Öl wird in die Rücklaufleitung 33 gedrückt, wobei das Rückschlagventil 27 in der Zylinderdrossel 29 für den Rücklauf abgesperrt wird. Damit sind die Rücklaufbohrungen 30 der hinter dem Rückschlagventil 27 liegenden radialen Ebene der Zylinderdrossel 29 von der rückströmenden Ölstromführung ausgeschlossen. Das Öl fließt allein durch die im Durchmesser unterschiedlichen Rücklaufbohrungen 30 und 35 in der Steuerhülse und durch die zugeordneten Rücklaufbohrungen 34 und 36 im Steuerkolben in den Innenraum des Steuerventils 12 und von dort über den Rücklaufanschluss 8 zum Tank 2. Gleichzeitig wird das möglicherweise durch das geschlossene Rückschlagventil 27 hindurchtretende Lecköl über die Druckentlastungsbohrung 37 in der abgesperrten radialen Ebene der Zylinderdrossel 29 für den Rücklauf zum Tank 2 abgeleitet.
Beim Durchströmen des Steuerventils 12 wird die Umschalteinrichtung 38 über die Leitung 40 vom sich einstellenden Druck vor der Dosierpumpe 13 und über die Leitung 41 vom Druck hinter der Dosierpumpe 13 beaufschlagt, sodass der Ventilkörper 39 wegen des höheren Druckes vor der Dosierpumpe 13 und der größeren Fläche des Ventilkörpers 39 die dargestellte geschlossene Stellung einnimmt. Damit ist die Verbindung zwischen der Leitung hinter der Dosierpumpe 13 und der Leitung 42 zum Eingang unterbrochen und beide radialen Ebenen der Zylinderdrossel 24 für den Zulauf sind an der Ölstromversorgung des Lenkzylinders 6 beteiligt.

Im Notbetrieb wird die Ölversorgung wegen des Ausfalls der Versorgungspumpe 1 durch die Handkraft ausgeführt, in dem das aus dem Lenkzylinder 6 zurückfließende Öl und eventuell das aus dem Tank 2 angesaugte Öl zum Lenkzylinder 6 gefördert wird. Dadurch stellt sich vor der Dosierpumpe 13 ein geringerer Druck als hinter der Dosierpumpe 13 ein. Diese Druckverhältnisse führen dazu, dass der Ventilkörper 39 der Umschalteinrichtung 38 in die linke Endstellung verschoben wird. Damit wird eine Verbindung zwischen der Leitung 41 hinter der Dosierpumpe 13 und der Leitung 42 zum Eingang der Lenkeinrichtung 5 frei. Auf Grund der Verbindung der Leitung 41 hinter der Dosierpumpe 13 und der radialen Ebene der Zylinderdrossel 24 in Durchflussrichtung vor dem dann schließenden Rückschlagventil 27 wird Drücköl aus diesen Räumen über die Umschalteinrichtung 38 in den Eingangsbereich geleitet und einer erneuten Ansaugung unterworfen. So stellt sich in der vor dem Rückschlagventil 27 liegenden Ebene ein geringerer Druck ein, der das Rückschlagventil 27 schließen lässt. Damit sind im Notlenkbetrieb nur die Zulaufbohrungen 25 *der ersten* radialen Ebene der Zylinderdrossel 24 beteiligt und die anderen Zulauf *bohrungen* 25 der zweiten *radialen Ebene* sind abgesperrt.

Da zwischen den Rücklaufbohrungen 35 in der Steuerhülse und den Zulaufschlitzen 21 im Steuerkolben keine Verbindung besteht, ist ein Kurzschluss zwischen der abgeschalteten und der nicht abgeschalteten Ebene unmöglich.

### Liste der Bezugszeichen

- 1: Versorgungspumpe
- 2: Tank
- 3: Prioritätsventil
- 4: Arbeitshydraulik
- 5: Lenkeinrichtung
- 6: Lenkzylinder
- 7: Zulaufanschluss
- 8: Ablaufanschluss
- 9: Zylinderanschluss
- 10: Zylinderanschluss
- 11: Lastsignalanschluss
- 12: Steuerventil
- 13: Dosierpumpe
- 14: Gehäuse
- 15: Eingangsdrossel
- 16: Eingangsbohrung in der Steuerhülse
- 17: Eingangsschlitz im Steuerkolben
- 18: Lastsignaldrossel
- 19: Kommutatordrossel
- 20: Kommutatorbohrung in der Steuerhülse
- 21: Zulaufschlitz im Steuerkolben
- 22: Zulaufleitung zur Dosierpumpe
- 23: Rücklaufleitung von der Dosierpumpe
- 24: Zylinderdrossel für den Zulauf
- 25: Zulaufbohrung in der Steuerhülse
- 26: Ringkanal für die Zulaufbohrungen
- 27: Rückschlagventil
- 28: Zulaufleitung für den Lenkzylinder
- 29: Zylinderdrossel für den Rücklauf
- 30: Rücklaufbohrung in der Steuerhülse
- 31: Ringkanal für Rücklaufbohrungen
- 32: Ringkanal für Rücklaufbohrungen
- 33: Rücklaufleitung vom Lenkzylinder
- 34: Rücklaufbohrung im Steuerkolben
- 35: Rücklaufbohrung in der Steuerhülse
- 36: Rücklaufbohrung im Steuerkolben
- 37: Druckentlastungsöffnung
- 38: Umschalteinrichtung
- 39: Ventilkörper
- 40: Leitung vor der Dosierpumpe
- 41: Leitung hinter der Dosierpumpe
- 42: Leitung zum Eingang
- 43: Kurzschlussbohrung in der Steuerhülse
- 44: Druckentlastungsleitung

## Patentansprüche

1. Hydraulische Lenkeinrichtung mit Übersetzungsänderung, die im wesentlichen aus einem Steuerventil (12) und einer Dosierpumpe (13) mit mehreren Verdrängerkammern besteht, wobei das Steuerventil (12) einen vom Lenkrad ansteuerbaren Steuerkolben und eine mit der Dosierpumpe (13) mechanisch verbundene Steuerhülse besitzt und der Steuerkolben und die Steuerhülse mit Kanälen ausgestattet sind, die miteinander und mit der Dosierpumpe (13) korrespondieren sowie die Verdrängerkammern der Dosierpumpe (13) über eine Zulaufleitung (28) mit mehreren parallelen Zulaufdrosseln mit einem Lenkzylinder (6) und den Lenkzylinder (6) über eine Rücklaufleitung (33) mit mehreren parallelen Rücklaufdrosseln mit einem Rücklaufanschluss (8) verbinden, wobei im Servolenkbetrieb mindestens eine Ebene der Zulaufdrosseln ständig mit dem Lenkzylinder (6) in Verbindung steht und die andere Ebene der Zulaufdrosseln mittels einer von der Druckdifferenz vor und nach der Dosierpumpe (13) steuerbaren Umschalteinrichtung (38) mit dem Zulaufanschluss (7) oder dem Ablaufanschluss (8) verbindbar sind und Rücklaufdrosseln in einer Ebene ständig mit dem Lenkzylinder (6) und mit dem Ablaufanschluss (8) verbunden sind und die andere Ebene ständig vom Ablaufanschluss (8) gesperrt sind,
**dadurch gekennzeichnet, dass** die im Lenkbetrieb ständig mit dem Ablaufanschluss (8) verbundenen Rücklaufdrosseln aus miteinander kommunizierenden Durchbrüchen in der Steuerhülse und im Steuerkolben bestehen und die Anzahl der ständig mit dem Ablaufanschluss (8) verbundenen Rücklaufdrosseln durch zusätzliche und parallel angeordnete Rücklaufdrosseln erweitert wird, die ebenfalls miteinander kommunizierende Durchbrüche aufweisen, wobei die zusätzlichen Rücklaufdrosseln in ihrer Lage und ihren Abmessungen so ausgelegt sind, dass sie in keiner der Betriebszustände eine Verbindung zu den Zulaufleitungen für den Lenkzylinder (6) besitzen und im ausgelenkten Zustand eine auf eine Eingangsdrossel (15) des Steuerventils (12) abgestimmte Öffnungscharakteristik aufweisen.

2. Hydraulische Lenkeinrichtung nach Anspruch 1,
**dadurch gekennzeichnet, dass** die Durchbrüche der im Lenkbetrieb ständig mit dem Ablaufanschluss (8) verbundenen Rücklaufdrosseln in der Steuerhülse und im Steuerkolben als Rücklaufbohrungen (30, 34) und die Durchbrüche der zusätzlichen Rücklaufdrosseln in der Steuerhülse und im Steuerkolben als Rücklaufbohrungen (35, 36) ausgebildet sind.

3. Hydraulische Lenkeinrichtung nach Anspruch 2, wobei die Rücklaufleitungen in zwei radialen Ebenen des Steuerventils (12) angeordnet sind und die Rücklaufleitungen einer radialen Ebene durch ein in Strömungsrichtung schließendes Rückschlagventil (27) abgesperrt sind,
**dadurch gekennzeichnet, dass** alle Rücklaufbohrungen (30, 34, 35, 36) in der radialen Ebene vor dem geschlossenen Rückschlagventil (27) angeordnet sind.

4. Hydraulische Lenkeinrichtung nach Anspruch 3,
**dadurch gekennzeichnet, dass** in der radialen Ebene hinter dem geschlossenen Rückschlagventil (27) mindestens eine zum Inneren führende Druckentlastungsöffnung (37) im Steuerkolben eingebracht ist, die zur Abführung von Lecköl im ausgelenkten Zustand mit mindestens einem der in dieser Ebene vorhandenen und nicht benutzten Rücklaufbohrungen (30) in der Steuerhülse in Verbindung steht.

## Claims

1. Hydraulic steering system with a change in ratio, which essentially comprises a control valve (12) and a metering pump (13) with several displacement chambers, which control valve (12) has a control piston which can be activated by the steering wheel and a control sleeve mechanically connected to the metering pump (13), and the control piston and the control sleeve are provided with ducts which co-operate with one another and with the metering pump (13) and connect the displacement chambers of the metering pump (13) via a return line (28) incorporating several parallel inflow throttles to a steering cylinder (6) and connect the steering cylinder (6) via a return line (33) incorporating several parallel return throttles to a return connector (8), and during servo-steering operation, at least one plane of the inflow throttles is permanently connected to the steering cylinder (6) and the other plane of the inflow throttles can be connected by means of a switching device (38) controllable by a pressure difference upstream and downstream of the metering pump (13) to the inflow connector (7) or to the discharge connector (8), and return throttles in one plane are permanently connected to the steering cylinder (6) and to the discharge connector (8) and the other plane is permanently shut off from the discharge connector (8),
**characterised in that**
the return flow throttles permanently connected to the discharge connector (8) during steering operation consist of inter-connected orifices in the control sleeve and in the control piston and the number of return flow throttles permanently connected to the discharge connector (8) is increased by additional return flow throttles disposed parallel, which likewise have intercommunicating orifices, and the additional return flow throttles are so designed in terms of their position and their dimensions that they are not connected to the inflow lines for the steering cylinder (6) in any of the operating modes and have an opening characteristic adapted to an input throttle (15) of the control valve (12) in the outwardly deflected state.

2. Hydraulic steering system as claimed in claim 1,
**characterised in that** the orifices of the return flow throttles in the control sleeve and in the control piston permanently connected to the discharge connector (8) during steering operation are provided in the form of return flow bores (30, 34) and the orifices of the additional return flow throttles in the control sleeve and in the control piston are provided in the form of return flow bores (35, 36).

3. Hydraulic steering system as claimed in claim 2, in which the return flow lines are disposed in two radial planes of the control valve (12) and the return flow lines of one radial plane are shut off by a check valve (27) closing in the flow direction,
**characterised in that** all return flow bores (30, 34, 35, 36) are disposed in the radial plane upstream of the closed check valve (27).

4. Hydraulic steering system as claimed in claim 3,
**characterised in that,** in the radial plane to the rear of the closed check valve (27), at least one pressure relief orifice (37) is provided in the control piston leading to the interior, which communicates with at least one of the return flow bores (30) in the control sleeve disposed in this plane and not being used in the outwardly deflected state in order to discharge leakage oil.

## Revendications

1. Installation de direction hydraulique à variation de démultiplication, comprenant principalement une vanne de commande (12) et une pompe de dosage (13) à plusieurs chambres de refoulement,
la vanne de commande (12) ayant un piston de commande commandé par le volant et un manchon de commande relié mécaniquement à la pompe de dosage (13), le piston de commande et le manchon de commande étant équipés de canaux qui se correspondent et correspondent à la pompe de dosage (13) ainsi que des chambres de refoulement de la pompe de dosage (13) par une conduite d'alimentation (28) à plusieurs organes d'étranglement d'alimentation en parallèle, avec un vérin de direction (6) et un branchement de retour (8) reliant le vérin de direction (6) par une conduite de retour (33) à plusieurs organes d'étranglement de retour en parallèle,
en mode de direction assistée, au moins un plan des organes d'alimentation étant relié en permanence au vérin de direction (6), et l'autre plan des organes d'alimentation étant relié par une installation de commutation (38) commandée par la différence de pression en amont et en aval de la pompe de dosage (13) au branchement d'alimentation (7) ou au branchement de sortie (8), et les organes d'étranglement de retour dans un plan étant en permanence reliés au vérin de direction (6) et au branchement de sortie (8) et l'autre plan étant en permanence coupé du branchement de sortie (8),
**caractérisée en ce que**
les organes d'étranglement de retour reliés en permanence en mode de guidage, avec le branchement de sortie (8), sont composés de passages du manchon de commande et du piston de commande communiquant entre eux et le nombre des organes d'étranglement de retour reliés en permanence au branchement de sortie (8) est étendu par des organes d'étranglement de retour supplémentaires, branchés en parallèle, comportant des passages communiquant également entre eux,
les organes d'étranglement de retour supplémentaires étant positionnés et dimensionnés pour que dans aucun état de fonctionnement, ils ne soient reliés aux conduites d'alimentation des cylindre de direction (6) et à l'état dégagé, ils présentent une caractéristique d'ouverture correspondant à l'un des organes d'étranglement (15) de la vanne de commande (12).

2. Installation de direction hydraulique selon la revendication 1,
**caractérisée en ce que**
les passages des organes d'étranglement reliés en permanence au branchement de sortie (8) en mode de guidage sont réalisés sous la forme de perçages de retour (30, 34) dans le manchon de commande et le piston de commande et les passages des organes d'étranglement supplémentaires sont réalisés dans le manchon de commande et dans le piston de commande comme perçages de retour (35, 36).

3. **Installation de direction hydraulique selon la revendication 2,**
dans laquelle les conduites de retour sont installées dans deux plans radiaux de la vanne de commande (12) et les conduites de retour d'un plan radial sont fermées par un clapet antiretour 27 se fermant dans le sens du passage,
**caractérisée en ce que**
tous les perçages de retour (30, 34, 35, 36) sont prévus dans le plan radial en amont du clapet antiretour fermé (27).

4. Installation de direction hydraulique selon la revendication 3,
**caractérisée en ce que**
dans le plan radial, derrière le clapet antiretour fermé (27), il y a au moins un orifice de décharge de pression (37) dirigé vers l'intérieur, est réalisé dans le piston de commande, pour évacuer le liquide de fuite, à l'état déployé, en étant relié à au moins l'un des perçages de retour (30) prévu dans ce plan et non utilisé, du manchon de commande.
